# EUROPÄISCHE PATENTSCHRIFT

(11) **EP 2 455 727 B1**
(45) Veröffentlichungstag und Bekanntmachung des Hinweises auf die Patenterteilung: **11.01.2017**
(21) Anmeldenummer: 11174896.8
(22) Anmeldetag: 21.07.2011
(51) Int. Cl.: B01D 17/02, B01D 17/12, G01F 23/296, C02F 1/40, E03F 5/16, C02F 101/32

(54) **Leichtstoff-Abscheider**
Separator for light density material
Séparateur de matière légère

(30) Priorität: 23.11.2010 DE 202010015760 U
(43) Veröffentlichungstag der Anmeldung: 23.05.2012
(73) Patentinhaber: Kessel AG, 85101 Lenting (DE)
(72) Erfinder: Kessel, Bernhard, 85101 Lenting (DE)
(74) Vertreter: Grünecker Patent- und Rechtsanwälte PartG mbB

(56) Entgegenhaltungen:
- DE-A1-102004 036 645
- US-A- 5 946 967
- US-A1- 2007 209 434
- US-B1- 6 619 118

## Beschreibung

Die Erfindung betrifft einen Leichtstoff-Abscheider gemäß Oberbegriff des Patentanspruchs 1.

Bei Leichtstoff-Abscheidern, wie beispielsweise Benzin-, Öl- oder Fettabscheidern, ist es seit Jahrzehnten bekannt, eine Überflutung mittels eines Überflutungs-Sensors zu detektieren und anzuzeigen, um Gegenmaßnahmen zeitgerecht einleiten oder planen zu können. Eine Überflutung kann aufgrund eines Ablaufstaus oder aus anderen Gründen, beispielsweise unterlassener oder fehlerhafter Wartung oder Entsorgung abgeschiedener Stoffe auftreten und erhöht die Betriebsgefahr der Leichtstoff-Abscheideanlage. Bei brennbare oder gasende Leichtstoffe behandelnden Abscheideanlagen kann eine Überflutung zur Explosionsgefahr oder zum Herausdrücken von Inhaltsstoffen führen und die Umwelt gefährden. Bei Fettabscheidern, die im Gegensatz zu beispielsweise Benzinabscheidern geruchsdicht verschlossen sind, kann der Abscheidebetrieb nachhaltig gestört werden. In jedem Fall ist eine auftretende Überflutung Grund für sofortige oder baldige Gegenmaßnahmen. Die bekannten Überflutungs-Sensoren messen die elektrische Leitfähigkeit am Messort und liefern ein Signal, sobald sich die Leitfähigkeit signifikant verändert. Das Signal repräsentiert die Überflutung nur bis zum Messort. Die Detektion einer Überflutung über Leitfähigkeitsmessungen erfordert relativ hohen Aufwand, und gegebenenfalls flankierende Maßnahmen am Überflutungs-Sensor, um dessen zuverlässigen Betrieb über lange Zeit sicherzustellen, und ist bei bestimmten Betriebszuständen zu träge oder unzuverlässig.

Aus US 5,946,967 A ist ein Überwachungssystem mit mehreren Ultraschallwandlern für eine Abscheideanlage bekannt. Die Ultraschallwandler sind im Inneren des Behälters in etwa in mittlerer Höhe und am Behälterdeckel installiert. Der oben liegende Ultraschallwandler hat seine Messrichtung nach unten. Die Meldesignale der Ultraschallwandler werden ausgewertet, so dass beispielsweise Abstände zwischen Grenzflächen unterschiedlicher Schichten oder der Füllstand und/oder Schichtdicken ermittelt und angezeigt werden. Der oben installierte Ultraschallwandler misst mit Ultraschallimpulsen in Luft. Sollte eine Überflutung bis zum oberen Ultraschallwandler eintreten, wird der Ultraschallwandler funktionsunfähig.

Aus US 2007/0209434 A1 ist ein Ultraschall-Überwachungssystem zum Messen des Füllstandes einer Flüssigkeit in einem Speichertank bekannt. Ein Ultraschallsensor ist an der Decke des Tanks befestigt und misst über reflektierte Pulse den Abstand nach unten bis zum Flüssigkeitsspiegel, wobei ein Minimalabstand von 12 bis 24 Zoll zulässig ist. Sobald der Flüssigkeitsspiegel innerhalb dieses Abstandsbereiches liegt, wird Alarm gegeben, und wird Flüssigkeit abgelassen.

Aus US 6 619 118 B1 ist ein Überwachungssystem für einen Abscheidertank bekannt. Das Überwachungssystem umfasst ein mit Reibschluss zwischen der Decke und dem Boden des Behälters festgelegtes Tauchrohr, an welchem außenseitig in unterschiedlichen Höhenlagen Sensoren platziert sind, die sich sämtliche unterhalb des Flüssigkeitsspiegels befinden. Bei den Sensoren handelt es sich um Drucksensoren, Temperatursensoren oder Leitfähigkeitsmesssensoren. Ein oberster Sensor ist ein Überflutungssensor, der ein Signal für die Gefahr einer Überflutung liefert. Im Luftraum oberhalb des Flüssigkeitsspiegels befindet sich kein Sensor.

DE 10 2004 036 645 A betrifft eine Ultraschall-Niveausensorvorrichtung mit einem Ultraschallwandler an einem Tauchrohr. Der Ultraschallwandler ist in der Nähe des Bodens eines Behälters installiert und misst nach oben, um den Füllstand oder das Niveau wenigstens einer Grenzfläche zwischen Schichten unterschiedlicher Dichten festzustellen. Bei der Messung wird die Laufzeit jedes Ultraschallimpulses, der von der Ebene des Füllstands oder der Grenzfläche zum Ultraschallwandler reflektiert wird, und liefert ein von der Laufzeit abhängiges Meldesignal. Da unterschiedliche Flüssigkeiten oder Schichten oder Änderungen der Zusammensetzung der Flüssigkeiten oder Schichten unterschiedliche Laufzeiten ergeben, ist zum Kalibrieren am Tauchrohr ein Reflektor angeordnet, der einen vorbestimmten Abstand vom Ultraschallwandler hat und eine Referenz für jede Messung schafft, so dass jede Messung selbstkalibrierend durchführbar ist.

Die europäische Patentanmeldung Az: 09 003 271 empfiehlt einen Fettabscheider mit einem Messsystem mit Ultraschallwandlern zum Messen primär der Fettschichtdicke, wobei die Fettschichtdicke ausgehend von dem beispielsweise durch die Unterkante des Ablaufs definierten Betriebs-Freispiegel über die Höhenlage der Grenzfläche zwischen der Flüssigkeit und der Fettschicht ermittelt wird. Aus dem Höhenabstand zwischen der Grenzfläche und dem Betriebs-Freispiegel wird über die als bekannt vorausgesetzte Dichte der Fettschicht die Fettschichtdicke errechnet, da die Fettschicht, von der ein Teil oberhalb des Betriebs-Freispiegels liegt, die Grenzfläche umso weiter gegenüber dem Betriebs-Freispiegel nach unten verdrängt, desto dicker die Fettschicht ist. Ferner kann auch die Schlammschichtdicke oder die Höhenlage der Oberseite einer Schlammschicht in Bodennähe detektiert werden. Die Ultraschall-Sensoren sind in der Flüssigkeit unterhalb des Betriebs-Freispiegels installiert und mit einer außerhalb des Behälters angeordneten Versorgungs- und Auswerteeinrichtung signalübertragend verbunden, so dass über permanenten oder zyklischen Betrieb der Ultraschall-Sensoren auch Aufzeichnungen zum Abscheidebetrieb über die Betriebsdauer erstellbar sind.

Der Erfindung liegt die Aufgabe zugrunde, einen Leichtstoff-Abscheider der eingangs genannten Art zu schaffen, der sich durch einen einfachen und vor allem betriebssicheren, sehr präzise arbeitenden Überflutungs-Sensor auszeichnet, der nicht nur das Auftreten einer Überflutung bis zum Messort des Überflutungs-Sensors registrieren und melden soll, sondern zumindest bei Auftreten einer länger dauernden Überflutung auch das Ausmaß und/oder den Trend der Überflutung detektieren soll.

Die gestellte Aufgabe wird mit den Merkmalen des Anspruchs 1 gelöst.

Ein Ultraschall-Sensor als Überflutungs-Sensor liefert im Fall einer Überflutung ein sehr präzises Meldesignal und benötigt keine flankierenden Maßnahmen für hochqualitative Messungen. Erfindungsgemäß wird somit der Ultraschall-Sensor als Überflutungs-Sensor nicht zur Abstandsmessung, sondern primär dazu verwendet wird, bei Anwesenheit eines Ultraschall-Impulse reflektierenden Mediums am Messort ein die Überflutung repräsentierendes Meldesignal abzugeben. Der Ultraschall-Sensor kann mit geringem Energieaufwand betrieben werden und lässt sich mit geringem Mehraufwand so auslegen, dass im Falle von brennbaren oder gasenden Leichtstoffen den behördlichen Vorschriften hinsichtlich des Explosionsschutzes entsprochen wird. Der Ultraschall-Sensor misst mit Ultraschallimpulsen im Luftraum des Behälters nach oben oder auch zur Seite und liefert, solange keine Überflutung stattfindet, kein Signal, sondern erst dann, wenn im Falle einer Überflutung der Ultraschall-Sensor von Flüssigkeit und/oder dem Leichtstoff kontaktiert ist. Dann liefert der Ultraschall-Sensor ein die Überflutung repräsentierendes Signal. Eine umgekehrte Signalauswertung ist ebenfalls möglich. Der Ultraschall-Sensor wird oberhalb des Betriebs-Freispiegels installiert, zweckmäßig in etwa oberhalb der Mitte des Ablaufes oder auf der Höhe des oberen Randes des Ablaufes, oder sogar gegebenenfalls noch etwas höher, jedoch zweckmäßig nicht direkt am Behälterdeckel. Der als Ultraschall-Sensor ausgebildete Überflutungs-Sensor ist universell für Fettabscheider, Benzinabscheider, Benzinabscheider oder Abscheider anderer Leichtstoffe (jeweils mit einer Dichte < 1) gleichermaßen geeignet, ist kostengünstig und außerordentlich betriebssicher. Da eine Überflutung beispielsweise auch durch vorübergehend starken Zulauf auftreten kann, aber schnell wieder verschwindet, und deshalb zwar gegebenenfalls zu registrieren ist, aber keine unmittelbaren Gegenmaßnahmen erfordert, ist es ferner zweckmäßig, wenn der verwendete Überflutungs-Sensor auch das Ausmaß der Überflutung detektieren kann. Diesbezüglich ist vorgesehen, dass der Ultraschall-Sensor mit Messrichtung nach oben ausgebildet und im Luftraum installiert ist und zusätzlich zur Detektion einer Überflutung bis zum Messort auch das Ausmaß der Überflutung misst und meldet. Da der Ultraschall-Sensor beispielsweise in Kontakt mit Luft im Luftraum kein Signal liefert, sondern erst ab Kontakt mit der Flüssigkeit oder einer Leichtstoffschicht, um zunächst das Auftreten einer Überflutung zu registrieren, kann er in der Folge bei zunehmender Überflutung aus der Laufzeit zurück zum Ultraschall-Sensor reflektierter Ultraschallimpulse das Ausmaß der Überflutung messen und anzeigen. So wird es möglich, den Trend des Verlaufs der Überflutung zu registrieren, oder gegebenenfalls den Trend zu einem allmählichen Abbau der Überflutung, die keine Gegenmaßnahmen erfordert, oder den Trend der Überflutung zur weiteren Zunahme mit der Folge, unbedingt eine Gegenmaßnahme einzuleiten. Somit erfüllt der UltraschallSensor als Überflutungs-Sensor eine Mehrfachfunktion bei der Detektion, mit welcher die Betriebssicherheit des Leichtstoff-Abscheiders noch verbessert werden kann. Die sehr aussagefähigen und rasch ansprechend erzeugten Signale des als Überflutungs-Sensor vorgesehenen Ultraschall-Sensors (Sender und Empfänger vereinigt) ermöglichen es ferner, Aufzeichnungen zum Betrieb des Leichtstoff-Abscheiders anzufertigen, um dem Betreiber oder einer Wartungsfirma zusätzliche Informationen zu liefern, zu welchen Zeiten, wie oft, und wie stark Überflutungen auftreten, beispielsweise auch, um eine Leitlinie zur Beurteilung zu geben, ob die Auslegung des Leichtstoff-Abscheiders den Anforderungen vor Ort entspricht, oder nicht, ob gegebenenfalls die Beschickung des Leichtstoff-Abscheiders geregelt, d. h. verringert oder verstärkt werden sollte, oder ob und wann der Betreiber die Wartung oder Entsorgung nachlässig vornimmt oder unterlässt.

Baulich einfach ist der Ultraschall-Sensor als Überflutungs-Sensors an einem im Behälter, vorzugsweise von oben, installierten Tauchrohr angeordnet und über die Installation des Tauchrohres selbst am richtigen Messort positioniert. Das Tauchrohr ist mit dem Ultraschall-Sensor ein vorfertigbares Erstausstattungs- oder Nachrüstteil des Leichtstoff-Abscheiders.

Insbesondere im Hinblick auf Vorschriften zum Explosionsschutz, aber auch im Hinblick auf lange Einsatzzeiten ohne Betriebsstörungen, kann es zweckmäßig sein, wenn der Ultraschall-Sensor an einer Leiterplatte angeordnet und mit der Leiterplatte in Kunststoff eingekapselt bzw. eingegossen ist. Die Einkapselung oder der Verguss bilden einen Sensorfinger, der relativ robust ist. Ferner ist dank der Einkapselung bzw. des Vergusses die ohnedies sehr geringe Stromleistung zum Betrieb des Ultraschall-Sensors kein Grund für eine Explosionsgefahr im Falle brennbarer abgeschiedener Leichtstoffe oder von diesem abgegebener Gase oder Dämpfe, weil die Energie außerhalb der Einkapselung bzw. des Vergusses bei Weitem geringer ist als die zum Zünden erforderliche Energie.

Unter anderem dank der Einkapselung lässt sich der Ultraschall-Sensor so ausbilden, dass den Vorschriften hinsichtlich Explosionsschutzes Rechnung getragen ist.

Bei einer zweckmäßigen Ausführungsform ist in dem Behälter, vorzugsweise an dem Tauchrohr, an welchem der als Überflutungs-Sensor arbeitende Ultraschall-Sensor angeordnet ist, wenigstens ein weiterer Ultraschall-Sensor zum Detektieren eines Betriebszustandes (Niveau oder Dicke) wenigstens einer im Behälter bodenseitig und/oder schwimmend abgeschiedenen Schicht vorgesehen. Alternativ oder additiv kann zumindest ein weiterer vorgesehener Ultraschall-Sensor als Referenzsensor zur Selbstkalibrierung des Messsystems dienen. Hierfür könnte auch ein zu einem der Ultraschall-Sensoren Ultraschallimpulse reflektierender Reflektor am Tauchrohr angeordnet sein. Einer dieser weiteren Ultraschall-Sensoren mit Messrichtung nach oben kann zum Beispiel zum Messen der Schichtdicke abgeschiedener Leichtstoffe eingesetzt werden, während gegebenenfalls ein anderer Ultraschall-Sensor mit Messrichtung nach unten entweder den Referenzsensor bildet oder zur Schichthöhen- oder Schichtdickenmessung einer bodenseitig abgeschiedenen Schicht benutzt wird. Das Tauchrohr dient als Träger sämtlicher Ultraschall-Sensoren, zu deren Positionierung im Behälter, und auch zum Übertragen der Signale nach außen zur Versorgungs- und Auswerteeinrichtung.

Bei einer zweckmäßigen Ausführungsform ist am Tauchrohr der Ultraschall-Sensor, der entweder als Referenzsensor und/oder als Dicken- oder Höhenmesssensor für die bodenseitige Schicht dient, zwischen dem als Überflutungs-Sensor dienenden Ultraschall-Sensor und einem unteren Ultraschall-Sensor zum Messen der Dicke der abgeschiedenen Leichtstoffschicht platziert.

Bei einer zweckmäßigen Ausführungsform stehen die Sensorfinger, die jeweils einen Ultraschall-Sensor enthalten, vom Tauchrohr annähernd senkrecht ab. Die Sensorfinger können annähernd in einer gemeinsamen Radialebene des Tauchrohrs, bezogen auf die Tauchrohr-achse, platziert sein, wobei, zweckmäßig zwei in der Flüssigkeit positionierte Ultraschall-Sensoren bzw. Sensorfinger zueinander etwas versetzt sind, zweckmäßig, um etwa 10° zueinander winkelversetzt sind, so dass nicht nur die Referenzierung, sondern auch die Schichtdicken- oder Schichthöhenmessungen gleichzeitig durchgeführt werden können.

Jeder Sensorfinger kann annähernd zylindrisch sein und eine zur Messrichtung seines Ultraschall-Sensors senkrecht liegende Abflachung aufweisen, um sowohl einen gerichteten Austritt der Ultraschallimpulse als auch einen gerichteten Eintritt reflektierter Ultraschallimpulse sicherzustellen.

Unter anderem auch im Hinblick auf Explosionsschutz-Vorschriften kann es zweckmäßig sein, wenn das Tauchrohr ein Kunststoffrohr ist, an welchem pro Ultraschall-Sensor ein T-Rohrstück zum Haltern eines Sensorfingers fixiert ist, wobei herstellungstechnisch einfach und zur Abkehr von Betriebsstörungen jeder Sensorfinger mit einem Einrastfuß sowohl verdrehgesichert als auch abgedichtet in einem Rohrstutzen des T-Rohrstücks festgelegt sein kann, zum Beispiel auch vergossen mit einem Kunstharz. Die Ultraschall-Sensor-Ausstattung des Leichtstoff-Abscheiders ist somit eine bequem vorfertigbare, außerhalb des Behälters prüfbare und kalibrierbare Ausstattung entweder zur Erstausstattung oder zur Nachrüstung.

Zweckmäßig wird jeder Ultraschall-Sensor über eine im Tauchrohr installierte Verkabelung, zweckmäßig gesondert, mit einer außerhalb des Behälters angeordneten Versorgungs- und Auswerteeinrichtung verbunden. Die Auswerteeinrichtung kann in einem Schaltschrank oder einer Steuerstation platziert sein, und gegebenenfalls Eingabe- und Anzeigevorrichtungen aufweisen. Alternativ oder additiv kann die Versorgungs- und Auswerteeinrichtung auch an das Internet angeschlossen sein, um online Betriebsinformationen zu strategisch wichtigen Stellen entfernt vom Leichtstoff-Abscheider zu übermitteln oder von dort abrufen zu lassen.

Anhand der Zeichnungen werden Ausführungsformen des Erfindungsgegenstandes erläutert. Es zeigen:
- Fig. 1: eine schematische Schnittdarstellung eines Leichtstoff-Abscheiders,
- Fig. 2: eine Seitenansicht einer Ultraschall-Sensoreinrichtung,
- Fig. 3: einen Schnitt zu Fig. 2,
- Fig. 4: einen Längsschnitt eines Details, nämlich eines Sensorfingers der Ultraschall-Sensorvorrichtung, und
- Fig. 5: eine Draufsicht zu Fig. 4, und
- Fig. 6: einen Schnitt einer konkret ausgeführten Leichtstoff-Abscheiders.

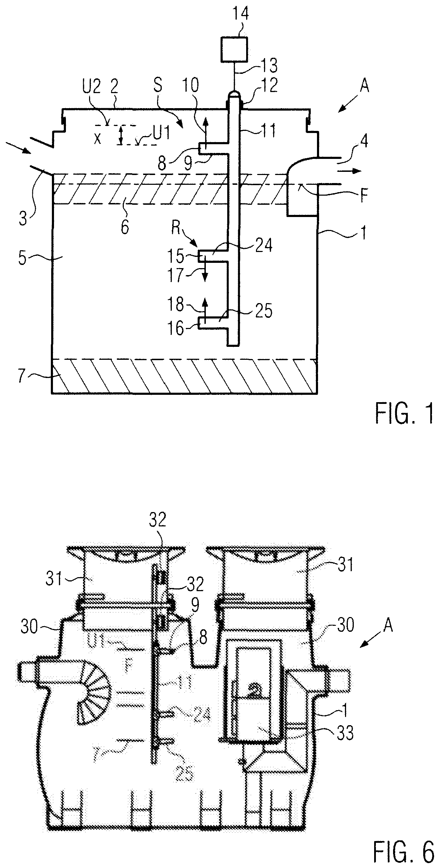

Ein in Fig. 1 schematisch gezeigter Leichtstoff-Abscheider A als Teil einer nicht näher hervorgehobenen Abscheideanlage weist einen Behälter 1 mit einem oberseitigen Verschlussdeckel 2, einem Flüssigkeits-Zulauf 3 und einen tieferliegenden Flüssigkeitsablauf 4 auf Der Leichtstoff-Abscheider A kann ein Benzinabscheider, Ölabscheider oder Fettabscheider oder Abscheider für andere Leichtstoffe mit einer Dichte < 1 sein, und zweckmäßig auch Sink- oder Schwerstoffe am Boden abscheiden. Über den Flüssigkeits-Zulauf 3 wird mit Leicht- und gegebenenfalls Schwerstoffen befrachtete Flüssigkeit 5, typischerweise Abwasser, eingeleitet. Aus dem Flüssigkeits-Ablauf 4 läuft durch Abscheiden gereinigte Flüssigkeit ab. Die Unterkante des Flüssigkeits-Ablaufes 4 definiert beispielsweise einen Betriebs-Freispiegel F, oberhalb dessen im Behälter 1 ein Luftraum vorliegt. Als Schicht 6 abgeschiedener Leichtstoffe schwimmen in der Flüssigkeit 5, während abgeschiedene Schwerstoffe, beispielsweise als Schlamm, in einer Schicht 7 am Boden abgeschieden werden.

Im Luftraum oberhalb des Betriebs-Freispiegels F ist ein Überflutungs-Sensor S installiert, der als Ultraschall-Sensor 8 ausgebildet und in einem Sensorfinger 9 an einem Tauchrohr 11 angebracht und mittels des Tauchrohres 11 bzw. dessen Installation 12 im Verschlussdeckel 2 (oder alternativ) in der Oberseite des Behälters 1 neben dem Verschlussdeckel 2 von oben her installiert ist. Der Ultraschall-Sensor 8 ist beispielsweise mit Messrichtung 10 nach oben zum Verschlussdeckel 2 ausgebildet. Der Ultraschall-Sensor 8 ist im Sensorfinger 9 beispielsweise unterhalb des Verschlussdeckels 2 im Luftraum und oberhalb des Flüssigkeitsablaufes 4 positioniert und über eine Verkabelung 13 an eine Versorgungs- und Auswerteeinrichtung 14 angeschlossen. Der Ultraschall-Sensor 8 erzeugt beispielsweise in Luft kein Meldesignal, sondern erst im Fall einer Überflutung U1 bis zum Messort durch den Kontakt mit der Schicht 6 oder der Flüssigkeit 5 ein Meldesignal, das das Auftreten einer Überflutung U1 bis zum Messort repräsentiert und meldet. Im Grunde genommen ist der Ultraschall-Sensor 8 gleichzeitig Sender und Empfänger, d. h. ein Ultraschall-Wandler, der mit elektrischer Leistung versorgt wird und entweder permanent oder periodisch betrieben wird.

Im gezeigten Fall in Fig. 1 ist die Messrichtung 10 vertikal nach oben orientiert, so dass der Ultraschall-Sensor 8 bei einer Überflutung, die von U1 zu U2 zunimmt, auch das Ausmaß X der Überflutung messen und anzeigen kann, indem die Laufzeit der Ultraschallimpulse bis zur reflektierenden Oberfläche der Schicht 6 oder der Flüssigkeit 5 gemessen und daraus das Ausmaß X errechnet werden kann. Das Tauchrohr 11 erstreckt sich zumindest im Wesentlichen vertikal bis in Bodennähe des Behälters 1 und kann an geeigneter Stelle im Behälter 1 zusätzlich abgestützt sein.

In dem Leichtstoff-Abscheider A in Fig. 1 sind, vorzugsweise, am Tauchrohr 1 innerhalb der Flüssigkeit 5 und oberhalb des Bodens des Behälters 1 zwei weitere Sensorfinger 24, 25, jeweils mit einem Ultraschall-Sensor 15, 16 angeordnet. Der untere Ultraschall-Sensor 16 mit einer Messrichtung 18 vertikal nach oben dient zum Messen beispielsweise der Dicke der Schicht 6, indem die Grenzfläche zwischen der Schicht 6 und der Flüssigkeit 5 detektiert wird. Dieser Abstand wird mit dem Abstand des Ultraschall-Sensors 16 zur gegebenen Höhe des Betriebs-Freispiegels F verglichen, um die Eintauchtiefe der Schicht 6 zu ermitteln, aus der dann über die als bekannt vorausgesetzte Dichte der Schicht 6 bzw. deren Schwimmverhalten die Dicke der Schicht 6 errechnet wird.

Ferner ist im Sensorfinger 24 der Ultraschall-Sensor 15 mit einer Messrichtung 17 vertikal nach unten angeordnet, der die Dicke der Schicht 7 oder die Höhenlage deren Oberseite mittels davon reflektierter Ultraschallimpulse misst. Alternativ oder additiv bildet der Ultraschall-Sensor einen Referenzsensor R zur Selbstkalibrierung, indem aus dem vorbestimmten Abstand zwischen den Ultraschall-Sensoren 16, 15 die Laufzeit von Ultraschallimpulsen ermittelt wird, die ein Indiz für die momentane Übertragungsgeschwindigkeit von Ultraschallimpulsen in der Flüssigkeit 5 darstellt. Die Zusammensetzung und/oder Temperatur und/oder Luftbeimischung und/oder Befrachtung der Flüssigkeit 5 hat nämlich Einfluss auf die jeweilige Übertragungsgeschwindigkeit von Ultraschall-Impulsen. Die ermittelte momentane Übertragungsgeschwindigkeit in der Flüssigkeit 5 kann direkt oder in modifizierter Form auch zum Selbstkalibrieren des Ultraschall-Sensors 8, im Hinblick auf die gegebenenfalls unterschiedliche Übertragungsgeschwindigkeit in der Schicht 6, eingesetzt werden.

Detektiert der Ultraschall-Sensor 8 eine Überflutung, beispielsweise mindestens die Überflutung U1, bei der der Messfinger 9 von der Flüssigkeit 5 oder der Schicht 6 umspült ist, so wird ein Meldesignal abgegeben und registriert. Bleibt die Überflutung U1 über eine vorbestimmte Zeitdauer erhalten, ohne zu verschwinden, wird eine Anzeige zum Einleiten oder Planen einer Gegenmaßnahme initiiert. Die Überflutung U1 kann beispielsweise durch einen Ablaufstau und/oder einen momentan verstärkten Zulauf hervorgerufen werden. Verschwindet die Überflutung U1 innerhalb der vorbestimmten Zeitdauer von selbst, dann kann sie zwar registriert werden, es ist jedoch keine Gegenmaßnahme zu initiieren. Bleibt die Überflutung U1 aufrecht, muss eine Gegenmaßnahme eingeleitet werden, z. B. durch Absperren des Flüssigkeits-Zulaufes 3, und Abnehmen des Verschlussdeckels 2 zur Beseitigung des Ablaufstaus, oder eine Entsorgung der Schicht 6 und/oder der Schicht 7. Nimmt die Überflutung von U1 zu U2 oder noch weiter zu, wird dies als ein Trend ausgewertet, der eine zunehmende Gefahr bedeutet und unbedingt sofortige Gegenmaßnahmen erfordert. Denn es könnte beispielsweise zu einer Explosion im Falle brennbarer Leichtstoffe oder zum Überlaufen über den im Falle eines Benzinabscheiders nicht abgedichtet festgelegten Verschlussdeckels 2 kommen. Im Fall eines Fettabscheiders könnte die Fettschicht den dann abgedichtet festgelegten Verschlussdeckel 2 hochdrücken oder die Gefahr einer Verpuffung erzeugen. D. h., eine länger bleibende oder zunehmende Überflutung bedeutet in jedem Fall eine extreme Erhöhung der Betriebsgefahr des Leichtstoff-Abscheiders, die zuverlässig zu melden und für den Fall eventueller Regressansprüche zu registrieren bzw. aufzuzeichnen ist.

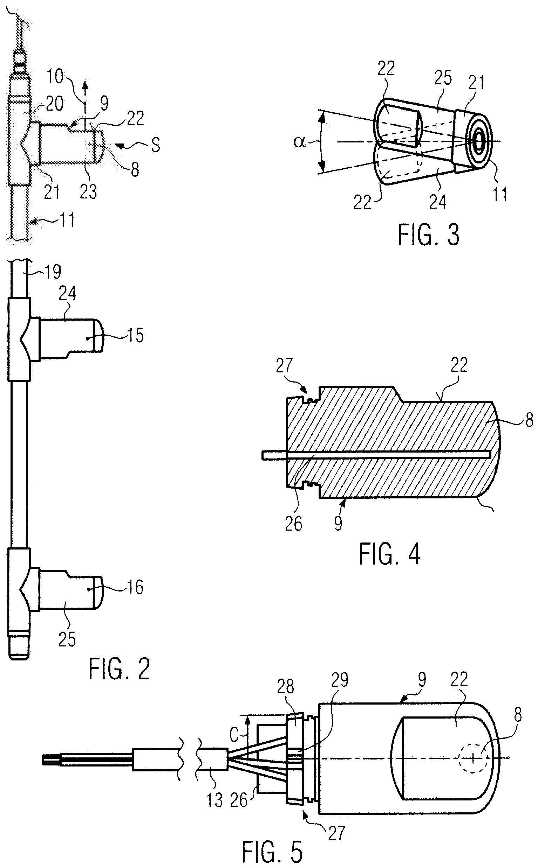

Im Falle des in Fig. 1 gezeigten Ultraschall-Sensors 8 als Überflutungs-Sensor S ist eine sehr gute Möglichkeit zur Beurteilung der Betriebssituation dadurch möglich, dass der Ultraschall-Sensor 8 nicht nur das Auftreten einer Überflutung U1 meldet, sondern auch die Zunahme der Überflutung beispielsweise bis zu U2 misst und aus der Zunahme X über die Zeit eine Information ableiten lässt, welchen Trend die Überflutung hat und wann mit einem kritischen Zustand zu rechnen ist. Die Informationen des Ultraschall-Sensors 8 geben beispielsweise ferner eine Möglichkeit, die korrekte Auslegung des Leichtstoff-Abscheiders auf den Einsatzfall zu beurteilen, da öfter auftretende Überflutungen oder rapide steigende Überflutungen ein Indiz sind, dass die Auslegung des Leichtstoff-Abscheiders A unzureichend ist und entweder zulaufseitige Regelungen zu treffen sind oder der Leichtstoff-Abscheider leistungsfähiger ausgelegt werden muss. Ferner sind die Informationen wichtige Kriterien im Falle von Regressansprüchen des Betreibers gegenüber dem Hersteller oder Einrichter, falls der Betreiber gemeldete kritische Betriebszustände ignoriert und/oder erforderliche Entsorgungszyklen unterlassen haben sollte. Die Versorgungs- und Auswerteeinrichtung 14 kann an der Abscheideanlage oder an strategisch wichtiger Überwachungsstelle beim Betreiber des Leichtstoff-Abscheiders A platziert sein, oder gegebenenfalls via Internet mit einer Kontrollstelle in Onlineverbindung stehen, oder gegebenenfalls via Internet sogar mit dem Hersteller oder Einrichter des Leichtstoff-Abscheiders A. Fig. 2 verdeutlich die Struktur des Tauchrohres 11 mit den daran angeordneten Sensorfingern 9, 24, 25, wobei nur der Sensorfinger 9 erläutert wird, weil die anderen Sensorfinger 24, 25 baugleich sein können. An dem Tauchrohr 11 ist, für den Fall, dass nur der Überflutungs-Sensor S mit dem Ultraschall-Sensor 8 alleine vorgesehen sein sollte, ein T-Rohrstück 20 außen fixiert, an welchem der Sensorfinger 9 in einem Rohrstück 21 so festgelegt ist, dass er im Wesentlichen senkrecht vom Tauchrohr 11 absteht. Falls auch die weiteren Sensorfinger 24, 25 oder nur der Sensorfinger 24 oder der Sensorfinger 25 am Tauchrohr 11 vorgesehen sein sollte bzw. sollten, liegen diese im Wesentlichen in einer Radialebene des Tauchrohres 11.

Da im geschilderten Einsatzfall der Sensorfinger 24 mit seinem Ultraschall-Sensor 15 eine Doppelfunktion hat, nämlich die Messung entweder der Dicke oder der Höhe der Schichtoberseite der Schicht 7 am Boden des Behälters 1, und als Referenzsensor zum Ermitteln der vorliegenden Übertragungsgeschwindigkeit für Ultraschallimpulse dient, sind die Sensorfinger 24, 25 gemäß Fig. 3 relativ zueinander etwas seitlich versetzt, vorzugsweise mit einem Winkel α von etwa 10° um die Achse des Tauchrohres 11 zueinander winkelversetzt, derart, dass zwar die Messrichtungen (Fig. 1, 17, 18) aneinander vorbei laufen, aber Ultraschallimpulse des Ultraschall-Sensors 17 auch vom Ultraschall-Sensor 16 bzw. umgekehrt empfangen werden können.

Jeder Ultraschall-Sensor 8, 15, 16 ist in einer Einkapselung oder einem Einguss 23 innen geborgen, z. B. einer Einkapselung 23 aus einem Epoxy-Gießharz, die eine zur jeweiligen Messrichtung, beispielsweise der Messrichtung 10 des Ultraschall-Sensors 8 senkrecht liegende Abflachung 22 aufweist. Die Einkapselung 23 bzw. der Sensorfinger 9 ist im Rohrstutzen 21 fixiert, beispielsweise mit Epoxid vergossen, so dass sowohl der Ultraschall-Sensor 8 abgeschirmt als auch der Befestigungsbereich des Sensorfingers 9 im Rohrstutzen 21 hermetisch abgedichtet sind.

Fig. 3 lässt erkennen, dass sich die Abflachungen 22 an den Sensorfingern 24, 25 trotz der Versetzung etwas überlappen, um die Referenzierfunktion zur Selbstkalibrierung der Ultraschall-Sensoren sicherzustellen.

Fig. 4 verdeutlich in einem schematischen Längsschnitt des Sensorfingers 9, dass der Ultraschall-Sensor 8 (Sender und Empfänger) beispielsweise als zylindrischer Stift in der Einkapselung 23 voll umschlossen auf einer Leiterplatte 26 montiert ist, von der gegebenenfalls ein Ende aus dem Sensorfinger 9 vorsteht. Am Befestigungsende des Sensorfingers 9 ist eine Fixierung 27 an der Einkapselung 23 einstückig angeformt, mit der der Sensorfinger 9 im Rohrstutzen 21 einsteckbar und fixierbar ist. Gemäß 5 weist die Fixierung 27 z. B. einen Einrastkragen 28 zum Beispiel mit Vorsprüngen 29 zur Drehsicherung des Sensorfingers 9 im Rohrstutzen 21 auf. Im Anschluss an den Fixierkragen 28 kann eine Dichtungsnut vorgesehen sein. In diesem Bereich wird der eingesetzte Sensorfinger 9 beispielsweise Epoxid vergossen. An die Leiterplatte 26 ist die Verkabelung 13 angeschlossen, die im Inneren des Tauchrohres 11 nach oben abgeschirmt installiert ist und zur Versorgungs- und Auswerteeinrichtung 14 (Fig. 1) führt.

Der Sensorfinger 9 kann einen Durchmesser von etwa 31 mm und eine Länge von etwa 100 bis 120 mm haben. Die Oberfläche der Einkapselung 23 ist glatt. Die Einkapselung 23 hat beispielsweise gelbe Farbe und ist transparent. Das Tauchrohr 11 und jedes T-Rohrstück 20 kann aus PVC hergestellt sein. Zur Installation und zur Abdichtung des Kabels 13 kann die in Fig. 1 angedeutete Installation 12 eine Kabelverschraubung mit Überwurfmutter und/oder Gegenmutter umfassen. Das Tauchrohr 11 kann über wenigstens eine Spannvorrichtung entweder am Verschlussdeckel 2 oder am Oberteil des Behälters 1 seitlich neben dem Verschlussdeckel 2 fixiert werden. Gegebenenfalls positioniert zum Beispiel bereits die Installation 12 des Tauchrohres 11 zumindest den Ultraschall-Sensor 8 am Messort innerhalb des Luftraums und oberhalb des Betriebs-Freispiegels F. Falls nur der Ultraschall-Sensor 8 als Überflutungs-Sensor S installiert wird, könnte das Tauchrohr 11 auch kürzer als gezeigt sein oder gleichzeitig das T-Rohrstück 20 ausbilden. Das Tauchrohr 11 ist mit dem Kabel 13 und zumindest dem Sensorfinger 9 mit dem Ultraschall-Sensor 8 als Überflutungs-Sensor S entweder eine Erstausstattungskomponente oder eine Nachrüstkomponente des Leichtstoff-Abscheiders A. Der Behälter 1 und der Verschlussdeckel 2 sind zweckmäßig Kunststoffformteile, könnten jedoch auch aus anderen Materialien gefertigt werden.

Figur 6 zeigt einen konkreten Typ eines als Koaleszenzabscheider ausgebildeten Leichtstoff-Abscheider A mit dem annähernd zylindrischen (liegende Zylinderachse) Behälter 1, der oberseitig zwei eingeformte Dorne 30 jeweils mit einem eingeschobenen Aufsatzstück 31 (zum Beispiel tagwasserdicht) aufweist. Zulauf 3 und Ablauf 4 sind axial unterhalb der Dorne 30 vorgesehen. Das Tauchrohr 11 ist mit zwei Befestigungen 32 an der Innenwand des linken Aufsatzstücks 31 festgelegt und weist, optional, die drei Sensorfinger 9, 24, 25, jeweils mit einem Ultraschallsensor 8, 15, 16, analog zu Fig. 2 auf. Der Sensorfinger 9 befindet sich oberhalb des Ablaufs 4 und des Zulaufs 3 im Luftraum auf einer dem Grenzstand entsprechenden Höhe. Der Sensorfinger 29 liegt etwa 500 mm und der Sensorfinger 25 etwa 700 mm darunter (maximal zulässige Höhe der Oberseite der Schlammschicht 7). Die Sensorfinger 9, 24, 25 weisen vom Tauchrohr 11 nach außen und zum rechten Dorn 30.

Im rechten Teil der Behälter 1 sind weitere Abscheidekomponenten 33 installiert.

## Patentansprüche

1. Leichtstoff-Abscheider (A), mit einem einen Flüssigkeits-Zulauf (3) und einen -Ablauf (4) aufweisenden Behälter (1), in welchem der Flüssigkeits-Ablauf (4) einen Betriebs-Freispiegel (F) definiert, und mit einem Überflutungs-Sensor (S), der im Behälter (1) oberhalb des Betriebs-Freispiegels (F) installiert ist, und eine den Betriebs-Freispiegel (F) überschreitende Überflutung (U1, U2) zumindest detektiert, **dadurch gekennzeichnet, dass** der Überflutungs-Sensor (S) einen im Luftraum installierten, in Kontakt mit Luft kein Überflutungs-Signal liefernden Ultraschall-Sensor (8)
zum Detektieren der Überflutung (U1, U2) bei Kontakt mit Flüssigkeit (5) oder einer in der Flüssigkeit (5) schwimmenden Schicht aufweist, der zusätzlich zum Detektieren des Ausmaßes (X) und/oder eines Trends der Überflutung (U2) mit einer Messrichtung (10) nach oben ausgebildet ist.

2. Leichtstoff-Abscheider nach Anspruch 1, **dadurch gekennzeichnet, dass** der Ultraschall-Sensor (8) an einem im Behälter (1), vorzugsweise von oben, installierten Tauchrohr (11) angeordnet und über die Installation (12) des Tauchrohrs (11) im Behälter (1) oberhalb des Betriebs-Freispiegels (F) positioniert ist.

3. Leichtstoff-Abscheider nach wenigstens einem der vorhergehenden Ansprüche, **dadurch gekennzeichnet, dass** der Ultraschall-Sensor (8) an einer Leiterplatte (26) angeordnet und zusammen mit der Leiterplatte (26) in, vorzugsweise transparenten und/oder eingefärbten Kunststoff eingekapselt bzw. eingegossen ist, und dass die Einkapselung bzw. der Verguss (23) einen Sensorfinger (9) bildet.

4. Leichtstoff-Abscheider nach wenigstens einem der vorhergehenden Ansprüche, **dadurch gekennzeichnet, dass** im Behälter (1), vorzugsweise an dem Tauchrohr (11), wenigstens ein weiterer Ultraschall-Sensor (15, 16) zum Detektieren eines Betriebszustandes wenigstens einer im Behälter (1) bodenseitig und/oder schwimmend abgeschiedenen Schicht (6, 7) und/oder als Referenzsensor (R) vorgesehen ist, vorzugsweise ein mit Messrichtung (18) nach oben ausgebildeter Leichtstoff-Schichtdicken-Messsensor und/oder ein mit Messrichtung (17) nach unten ausgebildeter Bodenschichthöhen- und/oder -dicken-Messsensor und/oder Referenzsensor (R), jeweils unterhalb des Betriebsfreispiegels (F) und oberhalb der bodenseitig abgeschiedenen Schicht (7).

5. Leichtstoff-Abscheider nach Anspruch 4, **dadurch gekennzeichnet, dass** der Bodenschichthöhen- und/oder -dicken-Messsensor und/oder Referenzsensor (R) in einem Sensorfinger (24) am Tauchrohr (11) zwischen dem Überflutungs-Sensor (S) und dem ebenfalls in einem Sensorfinger (25) untergebrachten Leichtstoffschicht-Dicken-Messsensor angeordnet ist.

6. Leichtstoff-Abscheider nach wenigstens einem der vorhergehenden Ansprüche, **dadurch gekennzeichnet, dass** die Ultraschall-Sensoren (8, 15, 16) in den Sensorfingern (9, 24, 25) vom Tauchrohr (11) annähernd senkrecht abstehen und annähernd in einer gemeinsamen Radialebene des Tauchrohres (11) platziert sind, wobei der Bodenschichthöhen- oder -dicken-Messsensor und/oder Referenzsensor (R) relativ zu den anderen Ultraschall-Sensoren (8, 16) versetzt ist, vorzugsweise um die Tauchrohr-Achse um etwa 10° winkelversetzt ist.

7. Leichtstoff-Abscheider nach wenigstens einem der vorhergehenden Ansprüche, **dadurch gekennzeichnet, dass** der jeweilige Sensorfinger (9, 24, 25) annähernd zylindrisch ist und eine zur Messrichtung (10, 17, 18) senkrecht liegende Abflachung (22) aufweist.

8. Leichtstoff-Abscheider nach Anspruch 2, **dadurch gekennzeichnet, dass** das Tauchrohr (11) ein Kunststoffrohr mit zum Haltern jeweils eines Sensorfingers (9, 24, 25) darauf fixiertem T-Rohrstück (20), vorzugsweise ebenfalls aus Kunststoff, umfasst, und dass jeder Sensorfinger mit einem Einrastfuß (27) verdrehgesichert und abgedichtet in einem Rohrstutzen (21) des T-Rohrstücks (20) festgelegt ist.

9. Leichtstoff-Abscheider nach wenigstens einem der vorhergehenden Ansprüche, **dadurch gekennzeichnet, dass** jeder Ultraschall-Sensor (8, 15, 16) über eine im Tauchrohr (11) innen installierte Verkabelung (13) mit einer außerhalb des Behälters (1) angeordneten Versorgungs- und Auswerteeinrichtung (14) verbunden ist, die, vorzugsweise, an eine Online-Verbindung wie das Internet angeschlossen ist.

## Claims

1. Separator (A) for light density material, comprising a container (1) having a liquid inlet (3) and a liquid outlet (4), in which container (1) the liquid outlet (4) is defining a free operation water level, and comprising a spillage sensor (S) installed in the container (1) above the free operation water level (F) for at least detecting a spillage (U1, U2) exceeding the free operation water level (F) **characterized in that** the spillage sensor (S) comprises an ultrasonic sensor (8) delivering no spillage signal in contact with air and installed in the air space for detecting the spillage (U1, U2) in case of contact with liquid (5) or a layer floating in the liquid (5), which ultrasonic sensor (8) is designed with a measuring direction (10) directed upwardly in order to additionally detect the extent (X) and/or a trend of the spillage (U2).

2. Separator for light density material according to claim 1, **characterized in that** the ultrasonic sensor (8) is arranged in a dip tube (11) installed, preferably from above, in the container (1), and that the ultrasonic sensor (8) is positioned above the free operation water level (F) by the installation (12) of the of the dip tube (11) in the container (1).

3. Separator for light density material according to at least one of the preceding claims, **characterized in that** the ultrasonic sensor (8) is arranged at a printed circuit board (26) and is encapsulated or potted together with the printed circuit board (26) in plastic material, preferably transparent or colored plastic material, and that the encapsulation or the potting (23) forms a sensor finger (9).

4. Separator for light density material according to at least one of the preceding claims, **characterized in that** at least one further ultrasonic sensor (15, 16) is provided in the container (1), preferably at the dip tube (11), for detecting an operation condition of at least one layer (6, 7) which is separated in the container (1) at the bottom and/or in a floating condition, and/or for serving as a reference sensor (R), the further sensor (15, 16) being preferably a light density material layer thickness measuring sensor having a measuring direction (18) directed upwardly and/or a bottom layer height and/or layer thickness measuring sensor having a measuring direction (17) directed downwardly for the layer at the bottom and/or a reference sensor (R), the at least one further ultrasonic sensor (15, 16) respectively being arranged below the free operation water level (F) and above the layer (7) separated at the bottom.

5. Separator for light density material according to claim 4, **characterized in that** the sensor measuring the height of the layer at the bottom and/or the thickness of the layer at the bottom and/or the reference sensor (R) is arranged in a sensor finger (24) located at the dip tube (11) between the spillage sensor (S) and the light density material - layer thickness - measuring sensor arranged in another sensor finger (25).

6. Separator for light density material according to at least one of the preceding claims, **characterized in that** the ultrasonic sensors (8, 15, 16) arranged in the sensor fingers (9, 24, 25) protrude substantially perpendicular from the dip tube (11) and are placed approximately in a common radial plane of the dip tube (11), such that the measuring sensor for the height or thickness of the layer at the bottom and/or the reference sensor (R) is/are offset in relation to the other ultrasonic sensors (8, 16), preferably angularly offset by about 10° about an axis of the dip tube (11).

7. Separator for light density material according to at least one of the preceding claims, **characterized in that the** respective sensor finger (9, 24, 25) is substantially cylindrical and has a flat portion (22) in the cylinder coat which flat portion (22) extends perpendicularly to the measuring direction (10, 17, 18).

8. Separator for light density material according to claim 2, **characterized in that** the dip tube (11) is a tube made from plastic material on which a T-tube piece (20) is fixed for fixing a respective sensor (9, 24, 25), the T-tube piece (20) preferably being made of plastic material, and that each sensor finger is secured against rotation and in sealed fashion in a pipe socket (21) of the T-tube piece (20) with a clinching foot (27).

9. Separator for light density material according to at least one of the preceding claims **characterized in that** each ultrasonic sensor (8, 15, 16) is connected with a supplying and evaluating assembly (14) arranged outside of the container (1) via a cabling (13) installed inside the dip tube (11), which supplying and evaluating assembly (14), preferably, is connected to an online-connection like the internet.

## Revendications

1. Séparateur de matières légères (A) comprenant un réservoir (1), qui présente une entrée d'alimentation de liquide (3) et une sortie d'écoulement de liquide (4), dans lequel la sortie d'écoulement de liquide (4) définit un niveau d'écoulement libre de fonctionnement (F), et comprenant un détecteur de submersion (S), qui est installé dans le réservoir (1) au-dessus du niveau d'écoulement libre de fonctionnement (F) et détecte au moins une submersion (U1, U2) dépassant le niveau d'écoulement libre de fonctionnement (F),
**caractérisé en ce que** le détecteur de submersion (S) comprend un détecteur à ultrasons (8) installé dans l'espace d'air et ne délivrant pas de signal de submersion lorsqu'il est en contact avec l'air, et destiné à détecter la submersion (U1, U2) en cas de contact avec le liquide (5) ou une couche flottant dans le liquide (5), et qui est en outre configuré pour détecter l'ampleur (X) et/ou une tendance de la submersion (U2) avec une direction de mesure (10) vers le haut.

2. Séparateur de matières légères selon la revendication 1, **caractérisé en ce que** le détecteur à ultrasons (8) est agencé sur un tube plongeur (11) installé dans le réservoir (1), de préférence par le haut, et est positionné, par l'intermédiaire de l'installation (12) du tube plongeur (11) dans le réservoir (1), au-dessus du niveau d'écoulement libre de fonctionnement (F).

3. Séparateur de matières légères selon l'une au moins des revendications précédentes, **caractérisé en ce que** le détecteur à ultrasons (8) est agencé sur une plaque de circuit imprimé (26) et est encapsulé ou surmoulé en commun avec la plaque de circuit imprimé (26), dans une matière plastique de préférence transparente et/ou colorée, et **en ce que** l'ensemble encapsulé ou surmoulé (23) forme un doigt de détecteur (9).

4. Séparateur de matières légères selon l'une au moins des revendications précédentes, **caractérisé en ce que** dans le réservoir (1), de préférence sur le tube plongeur (11), il est prévu au moins un autre détecteur à ultrasons (15, 16), qui est destiné à détecter un état de service d'au moins une couche (6, 7) séparée dans le réservoir (1) du côté du fond de celui-ci et/ou flottante, et/ou en tant que détecteur de référence (R), de préférence un détecteur de mesure d'épaisseur de couche de matières légères avec une direction de mesure (18) vers le haut et/ou un détecteur de mesure de hauteur et/ou d'épaisseur de couche de fond avec une direction de mesure (17) vers le bas, et/ou un détecteur de référence (R), respectivement sous le niveau d'écoulement libre de fonctionnement (F) et au-dessus de la couche (7) séparée du côté du fond.

5. Séparateur de matières légères selon la revendication 4, **caractérisé en ce que** le détecteur de mesure de hauteur et/ou d'épaisseur de couche de fond et/ou détecteur de référence (R) est agencé dans un doigt de détecteur (24) sur le tube plongeur (11) entre le détecteur de submersion (S) et le détecteur de mesure d'épaisseur de couche de matières légères également logé dans un doigt de détecteur (25).

6. Séparateur de matières légères selon l'une au moins des revendications précédentes, **caractérisé en ce que** les détecteurs à ultrasons (8, 15, 16) dans les doigts de détecteur (9, 24, 25) font saillie sensiblement de manière perpendiculaire du tube plongeur (11), et sont placés approximativement dans un plan radial commun du tube plongeur (11), le détecteur de mesure de hauteur et/ou d'épaisseur de couche de fond et/ou détecteur de référence (R) étant décalé par rapport aux autres détecteurs à ultrasons (8, 16), de préférence décalé angulairement d'environ 10° autour de l'axe du tube plongeur.

7. Séparateur de matières légères selon l'une au moins des revendications précédentes, **caractérisé en ce que** chaque doigt de détecteur respectif (9, 24, 25) est approximativement cylindrique et présente un méplat (22) d'orientation perpendiculaire à la direction de mesure (10, 17, 18).

8. Séparateur de matières légères selon la revendication 2, **caractérisé en ce que** le tube plongeur (11) comprend un tube de matière plastique sur lequel est fixée, pour le maintien de chaque doigt de détecteur (9, 24, 25), respectivement une pièce tubulaire en T (20), de préférence également en matière plastique, et **en ce que** chaque doigt de détecteur est fixé, avec un pied d'enclenchement (27), de manière bloquée en rotation et de façon étanche, dans un embout tubulaire (21) de la pièce tubulaire en T (20).

9. Séparateur de matières légères selon l'une au moins des revendications précédentes, **caractérisé en ce que** chaque détecteur à ultrasons (8, 15, 16) est relié, par l'intermédiaire d'un câblage (13) installé à l'intérieur du tube plongeur (11), à un dispositif d'alimentation et de traitement de données (14) agencé à l'extérieur du réservoir (1), et qui de préférence est raccordé à une liaison en ligne comme l'internet.
